# EUROPEAN PATENT SPECIFICATION

(11) **EP 1 676 949 B1**
(45) Date of publication and mention of the grant of the patent: **15.10.2008**
(21) Application number: 05027323.4
(22) Date of filing: 14.12.2005
(51) Int. Cl.: D06N 3/14, D06N 3/00, C08K 3/34, C08L 75/04, D04H 1/64

(54) **Process for the production of a microfibrous chamois woven-non-woven fabric containing an elastomeric nanocomposite matrix**
Verfahren zur Herstellung eines mikrofaserigen, fensterlederartigen gewebten/nicht-gewebten Produktes, das eine elastomere Nanokomposit-Matrix enthält
Procédé de production d'un tissu microfibreux chamois de type tissé/nontissé comprenant une matrice élastomère nanocomposite

(30) Priority: 29.12.2004 IT MI20042547
(43) Date of publication of application: 05.07.2006
(73) Proprietor: ALCANTARA S.p.A., 20138 Milano (IT)
(72) Inventor: Serravezza, Giuseppe, 05100 Terni (IT); Bianco, Paola, 05022 Amelia (TR) (IT); Cardinali, Walter, 06052 Cerqueto di Marsciano (Perugia) (IT); Hashimoto, Takafumi, Shiga (JP)
(74) Representative: Pipparelli, Claudio

(56) References cited:
- EP-A- 0 584 511
- WO-A-93/11190
- WO-A-97/49847

## Description

The present invention relates to a composite material comprising a microfibrous portion and an elastomer/lamellar clay nanocomposite matrix, preferably polyurethane/lamellar clay nanocomposite matrix, wherein said lamellar clay is selected from organophilic clays and functionalized organophilic clays.

The present invention also relates to a suede-non-woven fabric obtained starting from said composite material and said dyed suede-non-woven fabric.

The present invention also relates to a suede-non-woven fabric containing UV stabilizers, obtained starting from said composite material described above and dyed suede-non-woven fabric.

It is known that the polyurethane component of the above materials is not easily dyeable with respect to other polymers for fabrics, such as polyesters and nylon. Furthermore, once dyed, these polyurethane materials show a poor stability of the dyes to water washing and rubbing.

Attempts to increase the dyeability of the polyurethane matrix have been made. Patents EP-A-0662981 and JP-6207381, for example, describe the production of suede-non-woven fabric (hereinafter also indicated as microfibrous non-woven fabric) prepared using a microfibre based on polyethylene terephthalate (PET) or polyamide (Nylon 6 or Nylon 6-6) and a polyurethane-urea containing tertiary amine units in the chain, said tertiary amine units being part of the polyester polyol which forms the polyurethane. Said microfibrous non-woven fabric is therefore dyed both in the microfibrous component (with dispersed dyes), and in the polyurethane component, using reactive dyes (capable of chemically binding themselves to the amine and amide groups present in the polyurethane chain), acidic dyes, pre-metallized dyes (capable of binding themselves by the formation of ionic and dative bonds).

This technology, however, has drawbacks due to the formulation of the polyurethane. The amine group in the chain, in fact, could cause undesired basic catalysis effects during the synthesis of polyurethane.

A process has now been found to overcome said drawbacks: it enables a stable anchorage of the dye molecules with no effect on the PU synthesis.

Finally, the process of the present invention is much simpler than those of the prior art and allows a more stable anchorage not only of the dyes, but also of other types of additives, such as, for example, UV stabilizers, flame- retardants, anti-staining additives.

In accordance with this, the present invention relates to a process for the preparation of a composite material comprising microfibres selected from synthetic microfibres and elastomer/lamellar clay nanocomposite matrix, said lamellar clay being selected from organophilic lamellar clays and functionalized organophilic lamellar clays, the above process comprising the following steps:
(a) preparation of microfibres having an islands sea type structure and the subsequent formation of a microfibrous felt starting from said microfibres;
(b) impregnation of said microfibrous felt with an aprotic polar solvent dispersion of delaminated organophilic lamellar clay/polyurethane nanocomposite, or with a dispersion of delaminated functionalised organophilic lamellar clay /polyurethane nanocomposite and subsequent coagulation; thus obtaining the composite material of the present invention.

As far as the microfibres are concerned, these are selected from polyester-based microfibres (for example polyethylene terephthalate, polypropylene terephthalate, polybutylene terephthalate), polyamides (for example nylon 6, nylon 6-6 and nylon 12) polyacrylonitrile, preferably polyethylene terephthalate (PET) and polyamide (Nylon 6 and Nylon 6-6), even more preferably polyethylene terephthalate.

In the preferred embodiment, the elastomer is a polyurethane-urea.

The terms polyurethane and polyurethane-urea mean a polymer consisting of flexible segments (soft segments) and rigid segments (hard segments).

The soft segments can be polymeric portions based on:
- polyethers, such those deriving from polytetramethylene glycol diol (PTMG) polyethylene glycol diol (PEG), polypropylene glycol diol (PPG);
- polyesters, for example esters of adipic acids such as polyhexamethylene adipate diol (PHA), poly(3-methyl pentamethylene) adipate diol (PMPA) or polyneopentapentyl adipate diol (PNA); other polyesters can be produced by the opening of cyclic molecules such as caprolactone (thus obtaining the polycaprolactone diol, in short PCL);
- polycarbonates, such as polyhexamethylene carbonate diol (PHC), polypentamethylene carbonate diol (PPMC), poly-(3-methyl-pentamethylene carbonate) diol (PMPC), polytetramethylene carbonate diol (PTMC), blends thereof and co-polymers.

Polyesters-co-polyethers can also be used as flexible segments, formed by co-polymerization of the above-mentioned polyethers and polyesters, as well as polyesters-copolycarbonates obtained by co-polymerization of polyesters and polycarbonates.

Polyols used in the examples for polyurethanes synthesis normally have a numeral average molecular weight ranging from 1000 to 3000, preferably between 1750 and 2250.

The hard segments refer to polymeric chain portions deriving from the reaction of an organic diisocyanate, such as, for example, methylene-bis-(4-phenylisocyanate) (MDI) or toluene-diisocyanate (TDI) with a di-amine or glycolic chain extender. It is, in fact, well known that the completion of the polyurethane synthesis can be effected with diamines, thus obtaining polyurethane-ureas, or with glycols, thus obtaining polyurethanes.

Possible di-amines which can be used as chain extenders in the polyurethane-ureas production, are, among aliphatic amines, ethylene diamine (EDA), 1,3-cyclohexanediamine (1,3-CHDA), 1,4-cyclohexanediamine (1,4-CHDA), iso-phorondiamine (IPDA), 1,3-propylene diamine (1,3-PDA), 2-methylpentamethylenediamine (MPDM), 1,2-propylene diamine (1,2-PDA), and blends thereof. Typical examples of aromatic diamines to be used as chain extenders are 3,3'-dichloro-4,4'-diaminodiphenyl methane, methylene-bis(4-phenylamine) (MPA), 2,4-diamino-3,5-diethyltoluene, 2,4-diamino-3,5-di(methylthio)toluene. Said aliphatic and/or aromatic diamines can be added directly in the reactor or produced in situ reaction between the corresponding isocyanate and water. Chain extensions of the polyurethanes whereas, can be obtained by addition of diols such as ethylene glycol, tetramethylene glycol and blends. Finally, the chain extension can also be obtained with dicarboxylic acids, such as malonic acid, succinic acid and adipic acid.

The reactions used for polyurethanes and polyurethane-ureas synthesis are normally made in aprotic polar solvents, such as N,N-dimethyl acetamide (DMAc), N,N-dimethyl formamide (DMF), N-methylpyrrolidone (NMP). The above preparations are well known to experts in the field.

The definition "delaminated organophilic lamellar clay /polyurethane nanocomposite" relates to a dispersion of organophilic lamellar clay deeply mixed with a polyurethane or polyurethane-urea (hereunder both named polyurethane, unless specifically indicated), until intercalated or exfoliated delaminated structure is obtained are formed.

The definition "delaminated functionalized organophilic lamellar clay/polyurethane nanocomposite" relates to a dispersion of functionalized organophilic lamellar clay deeply mixed with a polyurethane, until intercalated or exfoliated delaminated structure is obtained.

The definition "organophilic lamellar clay" identifies a lamellar silicates (phyllosilicates) having negative charges on the lamellas and inorganic cations in the interlayer spaces, in which said cations have been substituted with organic "onium" ions, in order both to increase distance between lamellas and compatibility with of the polymer which has to be intercalated in these spaces.

Said lamellar silicates can also incorporate, in inter-layers space, water molecules, alcohols, ketones, aliphatic, cyclic or aromatic amines, or other polar substances, consequently swelling.

Said lamellar silicates can also have a triple-layer structure wherein each lamella consists of an octahedral sheet based on magnesium or aluminium oxide/hydroxide, situated between two tetrahedral sheets based on silica.

Examples of lamellar silicates are smectic clays, such as montmorillonite, saponite, beidelite, nontronite, ectorite, stevensite, bentonite, vermiculite, sauconite, magadite, keniatite, or substitutions or derivatives of the above clays and relative blends. Said clays can be whether natural or synthetic. Preferred lamellar clays are selected from montmorillonite, bentonite and relative blends.

The "onium" ions present in the lamellar organophilic clays, are selected from primary, secondary, tertiary or quaternary ammonium compounds, pyridinium compounds, imidazolinium compounds, phosphonium compounds, sulphonium compounds. Preferred examples of "onium" compounds are tallow-alkyl-bis(hydroxyethyl) methyl ammonium ion, tallow-alkyl-bis(hydroxymethyl) methyl ammonium ion, (hydrogenated tallow alkyl) 2-ethylhexyl dimethyl ammonium ion, bis(hydrogenated tallow alkyl) dimethyl ammonium ion, bis(hydrogenated tallow alkyl) methyl ammonium ion, (hydrogenated tallow alkyl) benzyl dimethyl ammonium ion.

The term "tallow" indicates the fat product deriving from the fatty tissues of cattle and/or sheep. Tallow contains, in the form of glycerides, oleic, palmitic, stearic, myristic and linoleic acid, in addition to lower amounts of other fatty acids and cholesterol. The most known characteristics of tallow is its solidification point, which is between 40 and 46°C. The terms tallow-alkyl or hydrogenated tallow-alkyl are commercial terms which normally refer to blends of C₁₆-C₁₈ alkyl groups deriving from tallow.

Typical examples of commercially available organophilic lamellar clays (therefore containing organic "onium" ions are organophilic montmorillonite containing the tallow-benzyldimethylammonium cation or the (hydrogenated tallow) benzyldimethylammonium cation.

Said lamellar organophilic clays have an interlayer distance of at least 17 Å. Said distance can be efficaciously measured through X-ray diffraction.

As far as functionalized organophilic lamellar clays are concerned, these are organophilic lamellar clays which have been functionalised by reaction with one or more compounds selected from those having general formula (I)

(X-R)ₙSi(-O-R')ₚ(R")ₘ (I)

wherein n is an integer from 1 to 3, m is an integer from 0 to 2 and p = 4-n-m with the condition that p ≥ 1;
R is selected from alkyl, alkylaryl, arylalkyl, alkoxyalkyl, alkoxyaryl, aminoalkyl, aminoaryl radicals and corresponding halogenated products, having from 2 to 30 carbon atoms, preferably from 2 to 6 carbon atoms, in which at least one hydrogen atom is substituted by X; or RX is a residue deriving from a UV stabilizer, radical scavenger or antioxidant, said residue being linked to the silicon atom present in the compound of general formula (I), preferably through a ureic (-NHCONH-) or urethane (-OCONH-) bond;
R' is an alkyl radical having from 1 to 6, preferably from 1 to 3 carbon atoms;
R" is selected from -H and an alkyl, alcoxyalkyl, alkylamino-alkyl group having from 1 to 6 carbon atoms;
X is selected from -OH, -SH, -S⁻M⁺, -O⁻M⁺, -NHR¹, epoxide products, -N=C=O, -COOR¹, halogens, unsaturated hydrocarbons, M⁺ being a metal cation selected from Li⁺, Na⁺, K⁺ and R¹ a hydrogen atom, or an alkyl radical having from 1 to 6 carbon atoms; X is preferably selected from NH₂, epoxide products and alcohols, the above groups being dyeable.

The above functionaliser compound (I) allows organophilic clays to be transformed into functionalised one by X functional groups linked to clay. The O-R' groups present in compound (I), in fact, allow -R-X groups to be fixed to the silicate lamellas by reaction between the -OR'alkoxy-silane groups of compound (I) and the OH groups on the lamellas surface of the clay, with the formation of particularly stable covalent siloxane bonds (X-R-Si-O-Si-layer). Said functionalisation can be made in an aprotic polar solvent, for example DMF, at a temperature of 60-90°C for 8-12 hours.

More details on this functionalisation, as well as on the preparation process of the polyurethane/organophilic clay and polyurethane/functionalised organophilic clay nanocomposites can be found in the co-pending patent application under joint name of the Milan Polytechnique and Alcantara SpA.

In any case, the amount of organophilic clay as such or functionalised one, ranges from 1 to 12% by weight with respect to polyurethane alone, preferably between 1 and 6% by weight with respect to the polyurethane.

First step (a) of the present invention, concerning preparation of a microfibre having an islands in the sea structure and the subsequent formation of a microfibrous felt starting from said microfibre, is made according to techniques well known to technical experts and, for example, according to descriptions reported in EP-A-0584511, US-A-3,716,614 and US-A-3,531,368. The island component of the microfibre used in the present invention, has a yam count of between 0.33 and 0.01 dtex (0.3 and 0.01 denier), preferably 0.20 and 0.11 dtex (0.18 and 0.1 denier), when the microfibrous non-woven fabric is used, for example, as covering surface, or between 0.077 and 0.011 dtex (0.07 and 0.01 denier) when the microfibrous non-woven fabric is used, for example, to produce higher lightness material like clothes. The microfibrous felt is first impregnated with a binding agent soluble in hot water, such as, for example, polyvinyl alcohol, from which the sea component is subsequently extracted, by one of the processes known and mentioned in the above patents.

Step (b) consists of the impregnation of the microfibrous felt obtained at the end of step (a) with the solution or dispersion of either delaminated organophilic lamellar clay/polyurethane nanocomposite or delaminated functionalised organophilic lamellar clay/polyurethane nanocomposite and subsequent its coagulation. In an embodiment, the microfibrous felt produced in (a) is impregnated by means of a series of immersions in the solution or dispersion of either delaminated organophilic lamellar clay /polyurethane nanocomposite or delaminated functionalised organophilic lamellar clay /polyurethane nanocomposite. A subsequent coagulation step in water or in a solution of water and aprotic solvent, for example DMF, is then made at a temperature ranging, for example, from 20 to 50°C. The purpose of this step of the process is to allow the fixation of the polyurethane nanocomposite matrix to the microfibre felt. For propriety's sake, we will call the product obtained at the end of step (b) as "greige".

The present invention also relates to a process for the preparation of dyed microfibrous non-woven fabrics which comprises:
(i) preparation of sheets having a thickness of about 1 mm and emery polishing of the surface of said cut sheets, starting from the "greige" obtained at the end of the above step (b);
(ii) dyeing the sheets prepared in step (i) by dyeing the microfibrous component and/or the elastomeric component;
(iii) optional subsequent finishing treatment.

The above microfibrous non-woven fabrics have an amount of nanocomposite elastomeric matrix of 10 to 40% by weight, preferably 18 to 35% by weight.

Step (i) consists in the reduction of the greige prepared as described in step (b) above into sheets having a thickness of about 1 mm and the subsequent emery polishing of the surfaces of said cut sheets in order to make microfibrous nap possible to appear o the surface. Step (i) is effected according to known methods, for example according to what is described in the above-mentioned patents.

Step (ii) consists in dyeing of the sheets prepared in step (i).

In case of incorporation of an organophilic lamellar clay in the polyurethane matrix (with the formation of organophilic lamellar clay/polyurethane nanocomposite), the dyeing process (step ii) is preferably carried out using specific dyes capable to make ionic bonds with the negatively charged lamellas (basic dyes) or with the "onium" ion present in the interlayer space of the clay (acidic dyes).

In case of incorporation of a functionalised organophilic lamellar clay in the polyurethane matrix (forming a functionalized organophilic lamellar clay/polyurethane nanocomposite), the dyeing treatment (step ii) is preferably made by means of specific dyes usage, called reactive dyes, capable to form covalent bonds with the functional groups present on the functionalised organophilic clay. The reactive dyes thus bound, allow the microfibrous non-woven fabric to be dyed in its nanocomposite matrix component, conferring to the dyed microfibrous non-woven fabric a particular resistance to discharge of the dye during water and soap-water washings.

When microfibres ares polyester based (such as polyethylene terephthalate (PET), polypropylene terephthalate (PPT), polybutylene terephthalate (PBT)), step (ii) can be effected in one or more steps. A two steps dyeing process can be carried out using dyes such as dispersed dyes for microfibrous component, and either acidic or basic dyes (when the organophilic lamellar lamellar clay / polyurethane nanocomposite elastomeric matrix contains "onium" ions and the clay lamellas have a net negative charge) or reactive dyes (when the elastomeric matrix contains functionalised organophilic lamellar clay /polyurethane nanocomposite) for elastomeric component.

The dyeing of the microfibrous non-woven fabric in a single step is also possible, corresponding to the nanocomposite elastomeric component dyeing, when a master batch died polyester is used to make microfibrous component..

When microfibres are based on polyamide (such as Nylon 6, Nylon 6-6 or Nylon 12), a single dyeing step can be effected using, in this step, either reactive dyes or acidic dyes (both microfibre and polyurethane nanocomposite matrix can be dyed together).

On the contrary, dispersed dyes usage for microfibre, requires a two-step process (microfibre and polyurethane nanocomposite matrix have to be dyed separately).

Preferred chemical structure for dispersed dyes is anthraquinone one, in order to assure a high lightfastness of dyed product.

The stability of said dyed products can be further improved by application of UV stabilisers during the dyeing phase, which, by penetrating the microfibre together with the dyestuff, are able to assure a higher resistance of the dye itself to photodegradation. A similar treatment with UV stabilisers can also be effected on the final, by means of a finishing treatment (step iii).

The dyeing cycle of the polyester microfibre consists of a first dyeing step, wherein the fibre is put in contact with a water dispersion containing low water soluble dyes (dispersed dyes), surfactants which disperse the dye and make easy its passage into the fibre, and pH conditions suitable for allowing the dye to easier penetrate inside the fibre. The temperature, usually ranging from 100 to 140°C, is selected in order to take the polyester above its glass transition temperature, thus facilitating the diffusion of the dye inside microfibre.

Dyeing cycle for the nanocomposite matrix, on the other hand, can be effected putting said microfibrous composite to a temperature ranging from 20 to 100°C and pH values ranging from 4 to 10, according to the nature of the reactive groups present on both clay and dispersed dyestuff. The duration of a dyeing process depends also on the type of dye, on the functional group present on the clay (when functionalised), and on the matrix morphology (higher or lower porosity). It normally ranges from 20 minutes to 1-2 hours.

In addition to the dyeing treatment, subsequent finishing treatment can be effected to confer additional specific properties, such as, for example, a softer feel. Among the types of finishing treatment, the possibility of processing the finished product under heat is also considered, up to a temperature of 250°C, for the time strictly necessary to make said processing under heat, such as, for example, coupling with other substrates, printing, embossing, lamination, injection moulding and thermoforming.

The use of organophilic clays with or without functional groups, also allows various other advantages to be obtained. The process of the present invention, for example, makes possible to anchor in a more stable way (i.e. by forming covalent bonds) not only dyes, but also other types of additives, such as, for example, UV stabilisers, flame retardants, anti-staining additives; the only condition to make it possible is that these additive could be able to link themselves to reactive functional groups on the functionalised organophilic lamellar clay used or to the "onium" ion modifier present in organophilic clays layers.

The process of the present invention also has shown the characteristic do not to give appreciable increases in rigidity of the microfibrous composite. This latter property, completely unexpected, seems to be particularly important in order to keep sensorial properties of the final product unchanged, a characteristic particularly appreciated in this kind of products.

The process of the present invention also allows additives introduction on the microfibrous non-woven fabric (such as, for example, UV stabilisers and anti-staining agents), by means of their direct fixing to the compounds having formula (I) before the formation of the functionalised organophilic lamellar clay/polyurethane nanocomposite, or to the un-dyed / dyed composite microfibrous non-woven fabric, with the condition that the elastomeric matrix of said composite material consists of a polyurethane/organophilic clay nanocomposite or a polyurethane/functionalised organophilic lamellar clay nanocomposite.

The following examples are provided for a better understanding of the present invention.

### Examples

### Description of the materials

The following examples envisage the use of polyethylene terephthalate (hereinaf ter PET) for the production of a microfibre, of polyurethanes (hereinafter PU) as an elastomeric matrix and either modified clays with alkyl ammonium cations, or functionalised with pending chains carrying reactive functional groups (present invention).

The PET microfibre is prepared by a two-component conjugated spinning, of the islands in the sea microfibre type, wherein PET (island component) is spun in the presence of polystyrene (sea component) according to what has been widely illustrated in the patents mentioned in the description of item (a) of the process. The PU used in the examples are aromatic polyurethanes prepared starting from 4,4'methylene-bis-(phenylisocyanate), (hereinafter MDI), through synthesis in N,N-dimethyl formamide (hereinafter DMF), in which the pre-polymer obtained by reaction between MDI and polymers diols (hereinafter polyols), is extended by the addition of water, as already described in the previous patents (EP-A-0584511, EP-A-1323859). The polyols used are PHC (with MW 2,000) and PNA (with MW 2,000) for polyurethane defined as PU1; PTMG (with MW 2,000) and PCL (with MW 2,000) for polyurethane defined as PU2.

The clays used are montmorillonites modified by substitution of the interlayer metal cation with quaternary ammonium salts. In particular, the commercial montmorillonite Dellite^{®} 43B was used (produced by Laviosa Chimica Mineraria SpA). Dellite^{®} 43B is an organophilic montmorillonite containing the tallowbenzyldimethylammonium ion.

The dispersed dyes Rosso Dianix^{®} EFB (Disperse Red 60), supplied by Dystar^{®} and Giallo Terasil^{®} 4G (Disperse Yellow 211), supplied by Ciba^{®}, were used to dye the microfibre; acidic dye Rosso Telon^{®} FL (Acid Red 337) and basic dye Rosa Astrazon^{®} FG (Basic Red 13), supplied by Dystar^{®} and reactive dyes Cibacron^{®} Navy FN-B (Reactive Blue 238) and Blue Lanasol^{®} 3R (Reactive Blue 50) supplied by Ciba, were used to dye the nanocomposite matrix.

The reactive stabilizer used in examples 6-12-13 is Tinuvin^{®} 213, produced by Ciba^{®}. The stabilising additives Irganox^{®} 1010 and Tinuvin^{®} 326, used to prepare impregnation solution, are also produced by Ciba^{®}.

### EXAMPLE 1 - preparation of polyester based polyurethane-urea PU1, the polymerization being carried out in mass.

266 g of PHC and 114 g of PNA both having a molecular weight of 2,000, were reacted in a nitrogen pressurised 2.5 litres reactor, at a temperature of 65°C, under stirring, with 139.4 g of MDI in a molar ratio isocyanate/diols of 2.9/1. After three hours from the beginning of the reaction, the pre-polymer thus obtained was cooled to temperature of 45°C and diluted with DMF, having a humidity content of 0.03%, until a solution at 25% by weight of pre-polymer was obtained, with a free NCO content of 1.46%. Maintaining the temperature at 45°C, 3.1 g of DBA and 5.9 g of water dissolved in 117.5 g of DMF were then slowly added over 5 minutes, so as to have a polyurethane-polyurea with a molecular weight of 43,000. Then temperature was raised to 65°C and the reactor was maintained under stirring for a further 8 hours, obtaining, at the end, a solution of polyurethane-urea, stable with time, having a viscosity of 21,000 mPa.sec at 20°C.

### EXAMPLE 2 - preparation of polyester based polyurethane-urea PU1, the polymerization being carried out in solution.

The same procedure of example 1 was followed, with the only difference that the pre-polymerization reaction was effected in the presence of DMF. For this purpose, 266 g of PHC and 114 g of PNA, both having a molecular weight of 2,000, were reacted in a 2.5 litres nitrogen pressurised reactor, at a temperature of 45°C and under stirring, with 139.6 g of MDI, in a molar ratio isocyanate/diols of 2.9/1 in the presence of DMF, having a humidity content of 0.03%, so as to obtain a 30% solution of pre-polymer. 3 hours after contact of the reagents, a diluted pre-polymer was obtained having an NCO content of 1.66%. 3.1 g of DBA and 5.9 g of water dissolved in 305 g of DMF were then slowly added over 10 minutes, so as to have a polyurethane-polyurea having a molecular weight of 43,000. Then temperature was raised to 65°C and the reactor was maintained under stirring for a further 8 hours, obtaining, at the end, a 25% by weight solution of polyurethane-urea, stable with time, having a viscosity of 20,000 mPa.sec at 20°C.

### EXAMPLE 3 - preparation of polyether/polyester based polyurethane-urea PU2.

285 g of PTMG and 95 g of PCL, both having a molecular weight of 2,000, were reacted in a 2.5 litres nitrogen pressurised reactor, at a temperature of 65°C and under stirring, with 134 g of MDI, in a molar ratio isocyanate/diols of 2.8/1. 3 hours after the beginning of the reaction, the pre-polymer thus obtained was cooled to a temperature of 45°C and diluted with DMF, having a humidity content of 0.03% until a solution at 25% by weight of pre-polymer was obtained with a free NCO content of 1.39%. Still maintaining the temperature at 45°C, 8.6 g of DBA and 5.1 g of water dissolved in 119 g of DMF were then slowly added over 5 minutes, so as to have a polyurethane-polyurea having a molecular weight of 15,000. Then temperature was raised to 65°C and the reactor was maintained under stirring for a further 8 hours, obtaining, at the end, a solution of polyurethane-urea, stable with time, having a viscosity of 23,000 mPa.sec at 20°C.

### EXAMPLE 4 - preparation of the polyurethane/organophilic lamellar clay nanocomposite through the solution intercalation method.

7 g of Dellite^{®} 43B are weighed in a 2 litres beaker equipped with a magnetic stirrer and 150 g of DMF are added. The dispersion is left under stirring for 2-3 hours, and 843 g of a polyurethane PU1 or PU2 solution in DMF at 16.6% by weight of polymer (see examples 1-3) are then added. The solution is left for a further 12-14 hours under stirring before its use. The dispersion thus formed contains 14% by weight of polymer and 5% by weight of clay, with respect to the polymer, with a total dry content equal to 14.74%.

### EXAMPLE 5 - preparation of the nanocomposite polyurethane/ functionalised organophilic lamellar clay with an amino-group, epoxy group, a UV stabilizer pendant or with other types of functional groups, using the solution intercalation method.

The same procedure described in example 4 is adopted, but making use, this time, of functionalised Dellite^{®} 43B clay instead of the commercial organophilic clay, taking care to mill the functionalised clay (very fine powder) before its dispersion in DMF and, in any case, before to add the polyurethane solution in DMF to the dispersed clay. The dispersion thus obtained must be kept under stirring until its use for the production of a greige. The functionalised Dellite^{®} 43B clay containing a UV stabiliser, was prepared starting from the UV stabiliser Tinuvin^{®} 213 of Ciba^{®}. The preparation methods of the functionalised clays are described in the co-pending patent application under the joint name of Alcantara and Politecnico di Milano.

### EXAMPLE 6 - preparation of the microfibrous non-woven fabric.

A fibre flock is prepared, consisting of PET 0.11÷0.12 dtex (0.10÷0.11 denier) microfibres in a polystyrene matrix, having the following characteristics: 4.2 dtex (3.8 denier), length 51 mm, 5 curlings/cm, strain ratio 2.5/1. In particular, the fibre consists of 57 parts by weight of polyethylene terephthalate microfibre, 40 parts by weight of polystyrene matrix and 3 parts by weight of polyethylene glycol, the latter contained in the polystyrene matrix.

When observed in section, the fibre reveals the presence of 16 PET microfibres englobed in the polystyrene matrix. A raw felt is prepared by means of the flock fibre, which is subjected to needle-punching to form a needle-punched felt having a density of 0.185 g/cm³. The needle-punched felt is dipped into a 20% by weight water solution of polyvinyl alcohol and is then dried. The needle-punched felt thus treated is subsequently immersed in trichloroethylene until the polystyrene matrix is completely dissolved, with the consequent formation of microfibrous non-woven fabric made of PET microfibres. The microfibrous non-woven fabric thus formed is dried, and an intermediate product is obtained, called D felt.

The elastomer solution prepared according to examples 1-5, was diluted with DMF, containing 5.1 g of Irganox^{®} 1010 and 15.4 g of Tinuvin^{®} 326 to form a 14% by weight solution. A polymer having a high porosity is obtained by coagulation in water of a film of a solution thus prepared.

The D felt is dipped into the elastomer solution of examples 1-5 and the microfibrous non-woven fabric thus impregnated is first squeezed by passing it through a pair of rolls and subsequently immersed for 1 hour in a water bath maintained at 40°C. A coagulated sheet is thus obtained which is passed into a water bath heated to 80°C, to extract the residual solvent and polyvinyl alcohol. After drying, a composite microfibrous sheet is obtained, containing 32% of nanocomposite elastomeric matrix, which is cut into sheets having a 1 mm thickness and the sheets thus obtained are then subjected to emery polishing in order to make microfibrous nap possible to appear on the surface. A buff greige is obtained having a thickness of 0.8 mm, ready to be subjected to a subsequent dyeing treatment.

### EXAMPLE 7 - dyeing of the microfibrous non-woven fabric with dispersed dyes.

The buff greige as prepared in example 6, is subjected to dyeing, by operating at 120°C for 1 hour in an aqueous dye bath containing the dispersed dye Rosso Dianix^{®} E-FB, in an amount of 0.3% by weight with respect to the buff greige. At the end of the treatment, a finished dyed suede synthetic leather is obtained which, after a further reduction cleaning treatment with sodium hydrosulphite in an alkaline environment in order to eliminate the excess of un-fixed dye, is subjected to a test to evaluate the resistance of the dye to wet rubbing (AATCC 8-2001), soap washing (AATCC 61-2001) and dry washing.

The evaluations shown in the following table, relating to the dyed microfibrous non-woven fabrics were effected as follows:
a) for dyestuff discharge on the test sample (multi-fibre felt for washing and fabric for rubbing) the dirty level is evaluated by comparison with the ISO 105A03 grey scale;
b) for the shade change of the sample, before and after the test, the ISO 105A02 grey scale is used;
c) the evaluation is effected by comparing the change in shade or the dirty level with the standard contrasts of the suitable grey scale; an evaluation equal to 5 corresponds to no change in shade or colour transfer, whereas an evaluation of 1 corresponds to the maximum contrast appearing in the grey scale used.

| **Test** | **Evaluation** |
|---|---|
| WET RUBBING | 3/4 |
| DRY RUBBING | 4 |
| WASHING WITH SOAP (shade change) | 5 |
| WASHING WITH SOAP (colour discharge on multi-fibres) | 4 |
| DRY WASHING (shade change) | 5 |
| DRY WASHING (colour discharge on multi-fibres) | 4/5 |

In the same way, another portion of buff greige was dyed under the same conditions, using the disperse colour yellow Terasil^{®} 4G at 0.5% by weight with respect to the buff greige. The evaluations of the dye resistance to wet rubbing, soap washing and dry washing are shown in the following table.

| **Test** | **Evaluation** |
|---|---|
| WET RUBBING | 4 |
| DRY RUBBING | 4/5 |
| WASHING WITH SOAP (shade change) | 5 |
| WASHING WITH SOAP (colour discharge on multi-fibres) | 5 |
| DRY WASHING (shade change) | 5 |
| DRY WASHING (colour discharge on multi-fibres) | 5 |

### EXAMPLE 8 - dyeing of the elastomeric component of the microfibrous non-woven fabric (impregnated with polyurethane/organophilic lamellar clay nanocomposite) with acidic dyes.

The buff greige is prepared as described in example 6 starting from mass dyed PET instead of pristine one, using the polyurethane/organophilic lamellar clay nanocomposite prepared in example 4.

Polyurethane nanocomposite matrix dyeing is effected by operating at 80°C for 45 minutes in an aqueous dyeing bath at pH 7, containing the acidic dye Rosso FL Telon^{®}, in an amount of 3% by weight with respect to the buff greige.

At the end of the treatment, after a washing step with a surfactant at 65°C for 20 minutes in order to eliminate the un-fixed dye, a microfibrous non-woven fabric is obtained, dyed in the polyurethane portion which, after finishing, is subjected to tests for the evaluation of the dye resistance to wet rubbing (AATCC 8-2001), soap washing (AATCC 61-2001) and dry washing, and the values are shown in the following table.

| **Test** | **Evaluation** |
|---|---|
| WET RUBBING | 4 |
| DRY RUBBING | 4 |
| WASHING WITH SOAP (shade change) | 5 |
| WASHING WITH SOAP (colour discharge on multi-fibres) | 4/5 |
| DRY WASHING (shade change) | 5 |
| DRY WASHING (colour discharge on multi-fibres) | 4/5 |

### EXAMPLE 9 - dyeing of the elastomeric component in the microfibrous non-woven fabric (impregnated with polyurethane/organophilic lamellar clay nanocomposite) with basic dyes.

The buff greige is prepared as described in example 6 starting from mass dyed PET, using the polyurethane/clay nanocomposite prepared in example 4.

Polyurethane nanocomposite matrix dyeing is effected by operating at 80°C for 1 hour in an aqueous dyeing bath at pH 4.5, containing the basic dye Astrazon Rosa^{®} FG, in an amount of 3% by weight with respect to the buff greige.

At the end of the treatment, after washing with a surface active product at 65°C for 20 minutes to eliminate the excess of dye, a microfibrous non-woven fabric is obtained, dyed in the polyurethane portion which, after finishing, is subjected to tests for the evaluation of the dye resistance to wet rubbing (AATCC 8-2001), soap washing (AATCC 61-2001) and dry washing, and the values are shown in the following table.

| **Test** | **Evaluation** |
|---|---|
| WET RUBBING | 2/3 |
| DRY RUBBING | 3/4 |
| WASHING WITH SOAP (shade change) | 5 |
| WASHING WITH SOAP (colour discharge on multi-fibres) | 4/5 |
| DRY WASHING (shade change) | 5 |
| DRY WASHING (colour discharge on multi-fibres) | 4/5 |

### EXAMPLE 10 - dyeing of the elastomeric component in the microfibrous non-woven fabric (impregnated with a polyurethane / functionalised organophilic lamellar clay nanocomposite) with reactive dyes.

The buff greige is prepared as described in example 6 starting from mass dyed PET, using the nanocomposite polyurethane/clay functionalised organophilic lamella clay with amino groups, prepared in example 5.

Elastomeric nanocomposite matrix dyeing is effected using the reactive dye Cibracron^{®} Navy FN-B under the following conditions:
1. treatment of the raw product with a saline solution 60 g/l NaCl containing 3% of reactive dye at 80°C for 30 minutes in order to obtain the dyestuff uptake in the matrix;
2. buff greige dyeing at 60°C for 1 hour, after addition of a solution of Na₂CO₃ 18 g/l, able to produce the reactive form of the dyestuff.

At the end of the treatment, a microfibrous non-woven fabric dyed on the polyurethane part is obtained which, after washing with a surfactant product at 80°C for 20 minutes in order to remove the un-fixed dye, is subjected to the evaluation test in order to measure dye resistance to wet rubbing (AATCC 8-2001), soap washing (AATCC 61-2001) and dry washing, and the values are shown in the following table.

| **Test** | **Evaluation** |
|---|---|
| WET RUBBING | 3/4 |
| DRY RUBBING | 4 |
| WASHING WITH SOAP (shade change) | 5 |
| WASHING WITH SOAP (colour discharge on multi-fibres) | 5 |
| DRY WASHING (shade change) | 5 |
| DRY WASHING (colour discharge on multi-fibres) | 5 |

In the same way, another portion of buff greige was dyed in the nanocomposite elastomeric matrix by means of the reactive dye Lanasol^{®} Blue 3R, using a 3% dye concentration of an aqueous solution at pH 8.5 and dyeing at a temperature of 80°C for 1 hour.

At the end of the treatment, a dyed microfibrous non-woven fabric in polyurethane part is obtained which, after washing with a surfactant at 80°C for 20 minutes in order to eliminate the un-fixed dye, is subjected to the evaluation test to measure dye resistance to wet rubbing (AATCC 8-2001), soap washing (AATCC 61-2001) and dry washing, and the values are shown in the following table.

| **Test** | **Evaluation** |
|---|---|
| WET RUBBING | 3/4 |
| DRY RUBBING | 4 |
| WASHING WITH SOAP (shade change) | 5 |
| WASHING WITH SOAP (colour discharge on multi-fibres) | 5 |
| DRY WASHING (shade change) | 5 |
| DRY WASHING (colour discharge on multi-fibres) | 5 |

Dyeing with reactive dyestuffs was also effected on a microfibrous non-woven fabric prepared as described in example 6, starting from mass dyed PET, but using a nanocomposite matrix of polyurethane/functionalised organophilic clay with epoxide groups instead of amino groups (prepared as described in example 5). Before the dyeing treatment with reactive dyes, an epoxy ring opening treatment was carried out in an aqueous alkaline environment (pH 10 and a temperature of 80°C for 20 minutes): final product performance, in terms of dyeing and dye resistance to washing and rubbing are similar to the previous ones.

### EXAMPLE 11 - dyeing of the microfibrous non-woven fabric with reactive

dyes (for functionalised nanocomposite matrix) and dispersed dyes (for fibre). The buff greige prepared as described in example 6, using the elastomeric nanocomposite polyurethane/functionalised organophilic lamellar clay with amino groups, prepared as described in example 5, was subjected to dyeing in its nanocomposite elastomeric matrix, with Cibacron^{®} The Navy FN-B in the same way as already described in the previous example 10.

The dyed buff greige, after washing with a surfactant at 80°C for 20 minutes in order to remove the un-fixed dye, was then subjected to its fibre component dyeing using the dispersed dye rosso Dianix^{®} E-FB under the conditions already described in example 7. The buff greige obtained, after nanocomposite elastomeric matrix dyeing with a reactive dye and dispersed dyestuff dyeing in fiber portion, has a colour shade in the middle between fibre and elastomeric matrix ones (a violet colour is obtained). The dyed microfibrous non-woven fabric is then subjected to evaluation test in order to measure dye resistance to wet rubbing (AATCC 8-2001), soap washing (AATCC 61-2001) and dry washing; the values found are shown in the following table.

| **Test** | **Evaluation** |
|---|---|
| WET RUBBING | 3/4 |
| DRY RUBBING | 4 |
| WASHING WITH SOAP (shade change) | 5 |
| WASHING WITH SOAP (colour discharge on multi-fibres) | 4 |
| DRY WASHING (shade change) | 5 |
| DRY WASHING (colour discharge on multi-fibres) | 4/5 |

### EXAMPLE 12 - Preparation of the raw product of a microfibrous non-woven fabric, using the nanocomposite PU2/functionalised organophilic lamellar clay with UV stabilizer pendant.

A buff greige was prepared, as described in example 6, with the elastomeric nanocomposite PU2 /functionalised organophilic lamellar clay with a UV stabilizer pendant, prepared as described in example 5; the stabilizers mix addition to impregnation solution before felt impregnation was in this case omitted.

### EXAMPLE 13 - accelerated UV ageing test of the microfibrous non-woven fabric containing a nanocomposite of polyurethane/functionalised organophilic lamellar clay with a UV stabilizer pendant.

A sample of a microfibrous non-woven fabric made in example 12 was subjected to a UV accelerated ageing test, using as reference a buff greige of pristine PU2, produced without addition of the UV stabilizer Tinuvin^{®} 326, in order to evaluate the efficiency of additive linked to clay. The conditions adopted are those prescribed in DIN 75202 (PV 1303); in particular:
- Relative humidity of chamber = 20 ± 10%;
- Irradiation = 60 W/m² (cumulative between 300-400 nm);
- Black panel temperature = 100 ± 3°C;
- Chamber temperature = 65 ± 3°C;
- Exposure duration = 1 Fakra (10 MJ/m²).

The buff greige containing UV stabiliser bound to the clay shown to resist the test much better than pristine one and it has a lower yellowing degree and better physico-mechanical characteristics than the reference sample, without additives.

## Claims

1. A composite material comprising:
a. microfibres selected from synthetic microfibres;
b. elastomer/lamellar clay nanocomposite matrix,
**characterised in that** said lamellar clay is selected from:
- organophilic lamellar clays;
- functionalised organophilic lamellar clays.

2. The composite material according to claim 1, wherein the microfibres are selected from microfibres based on polyesters, polyamides and polyacrylonitriles.

3. The composite material according to claim 1, wherein the elastomer is selected from polyurethane and polyurethane-urea and blends thereof, and the microfibres are selected from polyesters.

4. The composite material according to claim 2, wherein the microfibres are selected from microfibres based on polyethylene terephthalate, polypropylene terephthalate, polybutylene terephthalate, nylon 6, nylon 6-6 and nylon 12.

5. The composite material according to claim 4, wherein the microfibres are selected from microfibres based on polyethylene terephthalate.

6. The composite material according to claim 1, wherein the organophilic lamellar clay or the functionalised organophilic lamellar clay ranges from 1 to 12% by weight with respect to polyurethane.

7. The composite material according to claim 6, wherein the organophilic lamellar clay or the functionalised organophilic lamellar clay ranges from 1 to 6% by weight with respect to the polyurethane.

8. The composite material according to claim 1, wherein the lamellar clay is selected from smectic clays, such as, for example, saponite, deidellite, montmorillonite, nontronite, ectorite, vermiculite, stevensite, bentonite, sauconite, magadite, keniatite and swollen micas.

9. The composite material according to claim 8, wherein the lamellar clay is selected from montmorillonite.

10. The composite material according to claim 1, wherein the organophilic lamellar clay is selected from lamellar clays containing "onium" ions between the lamellas of said clays.

11. The composite material according to claim 10, wherein the "onium" ions are selected from ammonium compounds, pyridinium compounds, imidazolinium compounds or phosphonium compounds.

12. The composite material according to claim 11, wherein the "onium" ions are selected from tallowbenzyldimethylammonium ions and (hydrogenated tallow) benzyldimethylammonium ions.

13. The composite material according to claim 10, wherein the functionalised organophilic lamellar clays are selected from functionalised organophilic lamellar clays with polar groups selected from NHR, SH, epoxides, alcohols, COOR, unsaturated hydrocarbons, sulphonic acids, with R selected from hydrogen and alkyl radicals having from 1 to 10, and preferably from 1 to 3, carbon atoms.

14. The composite material according to claim 13, wherein the functionalised organophilic lamellar clays are selected from functionalised organophilic lamellar clays with dyeable polar groups selected from NH₂, SH, epoxides and alcohols.

15. The composite material according to claim 1, wherein the polyurethane/organophilic lamellar clay nanocomposite matrix is dyeable with cationic or anionic dyes.

16. The composite material according to claim 1, wherein the polyurethane/functionalised organophilic lamellar clay nanocomposite matrix is dyeable with cationic, anionic or reactive dyes.

17. The composite material according to claim 1, wherein the microfibrous part contains dyed in mass polyester microfibres.

18. The composite material according to claim 1, wherein the functionalised organophilic lamellar clays are selected from functionalised organophilic lamellar clays containing a residue deriving from molecules of antioxidants, radical scavangers and UV stabilizers.

19. A process for the preparation of the composite material according to claim 1, comprising the following steps:
(a) preparation of microfibres having an islands in the sea structure and the subsequent formation of a microfibrous felt starting from said microfibres;
(b) impregnation of said microfibrous felt with an aprotic solvent dispersion of delaminated organophilic lamellar clay /polyurethane nanocomposite, or with a dispersion of delaminated functionalised organophilic lamellar clay /polyurethane nanocomposite and subsequent coagulation.

20. Dyed suede woven-non-woven fabrics obtained starting from the composite material according to claims 1 to 18.

21. A process for the preparation of non-woven fabrics according to claim 20, comprising:
(i) preparation of sheets having a thickness of about 1 mm and emery polishing of the surface of said cut sheets, starting from the greige obtained at the end of the above step (b) described in claim 19;
(ii) dyeing of the sheets prepared in step (i) by dyeing the microfibrous component and/or the elastomeric component;
(iii) optional final finishing treatments.

22. The dyed suede non-woven fabrics according to claim 20, wherein the microfibrous component has a yam count of between 0.33 and 0.01 dtex (0.3 and 0.01 denier), preferably between 0.20 and 0.11 dtex (0.18 and 0.1 denier) or between 0.077 and 0.011 dtex (0.07 and 0.01 denier), depending on the field of use of the product.

23. The microfibrous non-woven fabrics according to claim 20, wherein the nanocomposite elastomeric matrix is present in an amount of 10 to 40% by weight.

24. The microfibrous non-woven fabrics according to claim 23, wherein the nanocomposite elastomeric matrix is present in an amount of 18 to 35% by weight.

25. The process for the preparation of the microfibrous non-woven fabrics according to claim 21, wherein sheets obtained at the end of step (i) are subjected to only to the polyurethane matrix dyeing, using dyes selected from dispersed dyes, anionic, cationic, reactive dyes.

26. The process for the preparation of the microfibrous non-woven fabrics according to claim 21, wherein the ground raw sheets obtained at the end of step (i) are subjected only to the nanocomposite polyurethane matrix dyeing, using anionic, cationic or reactive dyes, the microfibrous component consisting of dyed in mass polyester microfibres.

## Patentansprüche

1. Verbundmaterial, umfassend:
a. Mikrofasern, ausgewählt aus synthetischen Mikrofasern;
b. eine Elastomer/Schichtton-Nanoverbundstoffmatrix,
**dadurch gekennzeichnet, dass** besagter Schichtton ausgewählt ist aus:
- organophilen Schichttonen;
- funktionalisierten organophilen Schichttonen.

2. Verbundmaterial gemäß Anspruch 1, in dem die Mikrofasern ausgewählt sind aus Mikrofasern auf Basis von Polyestern, Polyamiden und Polyacrylnitrilen.

3. Verbundmaterial gemäß Anspruch 1, in dem das Elastomer ausgewählt ist aus Polyurethan und Polyurethanharnstoff sowie Mischungen davon, und die Mikrofasern ausgewählt sind aus Polyestern.

4. Verbundmaterial gemäß Anspruch 2, in dem die Mikrofasern ausgewählt sind aus Mikrofasern auf Basis von Polyethylenterephtalat, Polypropylenterephtalat, Polybutylenterephtalat, Nylon-6, Nylon-6-6 und Nylon-12.

5. Verbundmaterial gemäß Anspruch 4, in dem die Mikrofasern ausgewählt sind aus Mikrofasern auf Basis von Polyethylenterephtalat.

6. Verbundmaterial gemäß Anspruch 1, In dem der organophile Schichtton oder der funktionalisierte organophile Schichtton im Bereich von 1 bis 12 Gew.-% liegt, bezogen auf Polyurethan.

7. Verbundmaterial gemäß Anspruch 6, in dem der organophile Schichtton oder der funktionalisierte organophile Schichtton im Bereich von 1 bis 6 Gew.-% liegt, bezogen auf das Polyurethan.

8. Verbundmaterial gemäß Anspruch 1, in dem der Schichtton ausgewählt ist aus smektischen Tonen, wie zum Beispiel Saponit, Beidellit, Montmorillonit, Nontronit, Hektorit, Vermiculit, Stevensit, Bentonit, Sauconit, Magadit, Kenyait und gequollenen Glimmern.

9. Verbundmaterial gemäß Anspruch 8, in dem der Schichtton ausgewählt ist aus Montmorillonit.

10. Verbundmaterial gemäß Anspruch 1, in dem der organophile Schichtton ausgewählt ist aus Schichttonen, die "Onium"-Ionen zwischen den Schichten dieser Tone enthalten.

11. Verbundmaterial gemäß Anspruch 10, in dem die "Onium"-Ionen ausgewählt sind aus Ammoniumverbindungen, Pyridiniumverbindungen, Imidazoliniumverbindungen oder Phosphoniumverbindungen.

12. Verbundmaterial gemäß Anspruch 11, in dem die "Onium"-Ionen ausgewählt sind aus Talg-Benzyldimethylammonium-Ionen und (hydrierter Talg)-Benzyldimethylammonium-Ionen.

13. Verbundmaterial gemäß Anspruch 10, in dem die funktionalisierten organophilen Schichttone ausgewählt sind aus funktionalisierten organophilen Schichttonen mit polaren Gruppen, die ausgewählt sind aus NHR, SH, Epoxiden, Alkoholen, COOR, ungesättigten Kohlenwasserstoffen, Sulfonsäuren, wobei R ausgewählt ist aus Wasserstoff und Alkylradikalen, die 1 bis 10 und vorzugsweise 1 bis 3 Kohlenstoffatome aufweisen.

14. Verbundmaterial gemäß Anspruch 13, in dem die funktionalisierten organophilen Schichttone ausgewählt sind aus funktionalisierten organophilen Schichttonen mit färbbaren polaren Gruppen, die ausgewählt sind aus NH₂, SH, Epoxiden und Alkoholen.

15. Verbundmaterial gemäß Anspruch 1, in dem die Polyurethan/organophiler Schichtton-Nanoverbundstoffmatrix mit kationischen oder anionischen Färbemitteln färbbar ist.

16. Verbundmaterial gemäß Anspruch 1, in dem die Polyurethan/funktionalisierter organophiler Schichtton-Nanoverbundstoffmatrix mit kationischen, anionischen oder reaktiven Färbemitteln färbbar ist.

17. Verbundmaterial gemäß Anspruch 1, in dem der mikrofasrige Teil massegefärbte Polyestermikrofasern enthält.

18. Verbundmaterial gemäß Anspruch 1, in dem die funktionalisierten organophilen Schichttone ausgewählt sind aus funktionalisierten organophilen Schichttonen, die einen Rest enthalten, der aus Molekülen von Antioxidantien, Radikalfängern und gegenüber UV-Licht stabilisierenden Stoffen stammt.

19. Verfahren zur Herstellung des Verbundmaterials gemäß Anspruch 1, umfassend die folgenden Schritte:
(a) Herstellung von Mikrofasern, die eine "Inseln im Meer" (islands in the sea)-Struktur aufweisen und anschließende Bildung eines Mikrofaserfilzes ausgehend von diesen Mikrofasern;
(b) Imprägnieren dieses Mikrofaserfilzes mit einer Dispersion von delaminiertem organophilem Schichtton/Polyurethan-Nanoverbundstoff in aprotischem Lösemittel, oder mit einer Dispersion von delaminiertem funktionalisiertem organophilem Schichtton/Polyurethan-Nanoverbundstoff, und anschließende Koagulation.

20. Gefärbte Wildleder-Gewebe/Vliesstoffe, die ausgehend von dem Verbundmaterial gemäß einem der Ansprüchen 1 bis 18 erhalten werden.

21. Verfahren zur Herstellung von Vliesstoffen gemäß Anspruch 20, umfassend:
(i) Herstellung von Lagen, die eine Dicke von etwa 1 mm haben, und Abschmirgeln der Oberfläche dieser geschnittenen Lagen, ausgehend von der Rohware, die am Ende des obigen, in Anspruch 19 beschriebenen Schritts (b) erhalten wird;
(ii) Färben der in Schritt (i) hergestellten Lagen durch Färben des Mikrofaserbestandteils und/oder des Elastomerbestandteils;
(iii) wahlweise letzte Bearbeitungen zur Fertigstellung.

22. Die gefärbten Wildleder-Vliesstoffe gemäß Anspruch 20, in denen der Mikrofaserbestandteil eine Garnnummer zwischen 0,33 und 0,01 dtex (0,3 und 0,01 Denier), vorzugsweise zwischen 0,20 und 0,11 dtex (0,18 und 0,1 Denier) oder zwischen 0,077 und 0,011 dtex (0,07 und 0,01 Denier) aufweist, in Abhängigkeit vom Anwendungsbereich des Produkts.

23. Mikrofasrige Vliesstoffe gemäß Anspruch 20, wobei die Elastomer-Nanoverbundstoffmatrix in einer Menge von 10 bis 40 Gew.-% vorliegt.

24. Mikrofasrige Vliesstoffe gemäß Anspruch 23, wobei die Elastomer-Nanoverbundstoffmatrix in einer Menge von 18 bis 35 Gew.-% vorliegt.

25. Verfahren zur Herstellung der mikrofasrigen Vliesstoffe gemäß Anspruch 21, in dem Lagen, die am Ende von Schritt (i) erhalten werden, nur einer Färbung der Polyurethanmatrix unterzogen werden, unter Verwendung von Färbemitteln, die ausgewählt sind aus dispergierten Färbemitteln, anionischen, kationischen, reaktiven Färbemitteln.

26. Verfahren zur Herstellung der mikrofasrigen Vliesstoffe gemäß Anspruch 21, in dem die am Ende von Schritt (i) erhaltenen rohen Basislagen nur einer Färbung der Polyurethan-Nanoverbundstoffmatrix unterzogen werden, unter Verwendung von anionischen, kationischen oder reaktiven Färbemitteln, wobei der Mikrofaserbestandteil aus massegefärbten Polyestermikrofasern besteht.

## Revendications

1. Matière composite comprenant :
a. des microfibres choisies parmi les microfibres synthétiques ;
b. une matrice nanocomposite élastomère/ argile lamellaire,
**caractérisée en ce que** l'argile lamellaire est choisie parmi :
• les argiles lamellaires organophiles ;
• les argiles lamellaires organophiles fonctionnalisées.

2. Matière composite selon la revendication 1, dans laquelle les microfibres sont choisies parmi les microfibres à base de polyesters, de polyamides et de polyacrylonitriles.

3. Matière composite selon la revendication 1, dans laquelle l'élastomère est choisi parmi le polyuréthane et le polyuréthane-urée et les mélanges de ceux-ci, et dans laquelle les microfibres sont choisies parmi les polyesters.

4. Matière composite selon la revendication 2, dans laquelle les microfibres sont choisies parmi les microfibres à base de polyéthylène téréphtalate, de polypropylène téréphtalate, de polybutylène téréphtalate, de nylon 6, de nylon 6-6 et de nylon 12.

5. Matière composite selon la revendication 4, dans laquelle les microfibres sont choisies parmi les microfibres à base de polyéthylène téréphtalate.

6. Matière composite selon la revendication 1, dans laquelle l'argile lamellaire organophile ou l'argile lamellaire organophile fonctionnalisée représente entre 1 et 12% en poids par rapport au polyuréthane.

7. Matière composite selon la revendication 6, dans laquelle l'argile lamellaire organophile ou l'argile lamellaire organophile fonctionnalisée représente entre 1 et 6% en poids par rapport au polyuréthane.

8. Matière composite selon la revendication 1, dans laquelle l'argile lamellaire est choisie parmi les argiles smectiques, telle que, par exemple, la saponite, la beidellite, la montmorillonite, la nontronite, l'hectorite, la vermiculite, la stevensite, le bentonite, la sauconite, la magadiite, la kenyaite et les micas expansés.

9. Matière composite selon la revendication 8, dans laquelle l'argile lamellaire est choisie parmi la montmorillonite.

10. Matière composite selon la revendication 1, dans laquelle l'argile lamellaire organophile est choisie parmi les argiles lamellaires contenant des ions "onium" entre les feuillets desdites argiles.

11. Matière composite selon la revendication 10, dans laquelle les ions "onium" sont choisis parmi les composés ammonium, les composés pyridinium, les composés imidazolinium ou les composés phosphonium.

12. Matière composite selon la revendication 11, dans laquelle les ions "onium" sont choisis parmi les ions de benzyldiméthylammonium de suif et des ions de benzyldiméthylammonium de suif hydrogéné.

13. Matière composite selon la revendication 10, dans laquelle les argiles lamellaires organophiles fonctionnalisées sont choisies parmi les argiles lamellaires organophiles fonctionnalisées comportant des groupements polaires choisis parmi les NHR, le SH, les époxydes, les alcools, les COOR, les hydrocarbures insaturés, les acides sulfoniques, R étant choisi parmi l'hydrogène et les radicaux alkyles comportant de 1 à 10, et préférentiellement de 1 3, atomes de carbone.

14. Matière composite selon la revendication 13, dans laquelle les argiles lamellaires organophiles fonctionnalisées sont choisies parmi les argiles lamellaires organophiles fonctionnalisées comportant des groupements polaires pouvant être teintés choisis parmi le NH₂, le SH, les époxydes et les alcools.

15. Matière composite selon la revendication 1, dans laquelle la matrice nanocomposite de polyuréthane/argile organophile lamellaire peut être teintée avec des colorants cationiques ou anioniques.

16. Matière composite selon la revendication 1, dans laquelle la matrice nanocomposite de polyuréthane/argile organophile lamellaire fonctionnalisée peut être teintée avec des colorants cationiques, anioniques ou réactifs.

17. Matière composite selon la revendication 1, dans laquelle la partie en microfibres contient des microfibres de polyester teintées dans la masse.

18. Matière composite selon la revendication 1, dans laquelle les argiles lamellaires organophiles fonctionnalisées sont choisies parmi les argiles lamellaires organophiles fonctionnalisées comportant un radical dérivé de molécules d'antioxydants, de désactiveurs radicalaires et de stabilisateurs UV.

19. Procédé de préparation d'une matière composite selon la revendication 1, comprenant les étapes suivantes :
(a) préparation de microfibres présentant une structure du type "îlots dans la mer", puis formation d'un feutre en microfibres à partir de ces microfibres ;
(b) imprégnation de ce feutre en microfibres avec une dispersion de nanocomposites de polyuréthane/argile organophile lamellaire délaminée dans un solvant aprotique, ou avec une dispersion de nanocomposites de polyuréthane/argile organophile lamellaire fonctionnalisée délaminée et puis coagulation.

20. Etoffe de suédine teinte tissée/non-tissée obtenue à partir de la matière composite selon les revendications 1 à 18.

21. Procédé de préparation de textiles non-tissés selon la revendication 20, comprenant :
(i) la préparation de feuilles présentant une épaisseur d'environ 1 mm et le polissage à l'émeri de la surface desdites feuilles coupées, à partir du grège obtenu à la fin de l'étape (b) ci-dessus décrite dans la revendication 19 ;
(ii) la teinture des feuilles obtenues au cours de l'étape (i) en teintant le composé en microfibres et/ou le composé élastomère ;
(iii) des traitements finals de finition facultatifs.

22. Etoffe de suédine non-tissée selon la revendication 20, dans laquelle le composé en microfibres présente un compte en fils compris entre 0,33 et 0,01 dtex (0,3 et 0,01 denier), de préférence entre 0,20 et 0,11 dtex (0,18 et 0,1 denier) ou entre 0,077 et 0,011 dtex (0,07 et 0,01 denier), selon le domaine d'utilisation du produit.

23. Textile non-tissé en microfibres selon la revendication 20, dans lequel la matrice élastomère nanocomposite est présente selon une quantité comprise entre 10 et 40% en poids.

24. Textile non-tissé en microfibres selon la revendication 23, dans lequel la matrice élastomère nanocomposite est présente selon une quantité comprise entre 18 et 35% en poids.

25. Procédé de préparation de textile non-tissé en microfibres selon la revendication 21, dans lequel les feuilles obtenues à la fin de l'étape (i) sont soumises seulement à la teinture de la matrice de polyuréthane, en utilisant des colorants choisis parmi les colorants dispersés et les colorants anioniques, cationiques et réactifs.

26. Procédé de préparation de textile non-tissé en microfibres selon la revendication 21, dans lequel les feuilles brutes dépolies obtenues à la fin de l'étape (i) sont soumises seulement à la teinture de la matrice nanocomposite de polyuréthane, en utilisant des colorants anioniques, cationiques ou réactifs, le composé en microfibres étant formé de microfibres de polyester teintées dans la masse.
